# EUROPEAN PATENT APPLICATION

(11) **EP 2 712 104 A2**
(43) Date of publication of application: **26.03.2014**
(21) Application number: 13460062.6
(22) Date of filing: 13.09.2013
(51) Int. Cl.: H04J 14/02

(54) **Method and system for the transmission of additional signals via fiber optic communication system**

(30) Priority: 21.09.2012 PL 40086612
(71) Applicant: Telekomunikacja Polska S.A., 00-105 Warszawa (PL)
(72) Inventor: Perlicki, Krysztof, 05-820 Piastów (PL)
(74) Representative: Piotrowicz, Alicja

(57) **Abstract**

Additional optical signals with wavelengths of (λ_{A1}, ..., λ_{Az}), different from the wavelengths of useful optical signals with wavelengths of (λ₁, ..., λₙ), are modified in a processing unit (PU) and then introduced into a telecommunication optical fibre (OF) via a second photocoupler (Ph2). Correctness of transmission of all optical signals in the telecommunication optical fibre (OF) is controlled by an analysis unit (AU). The results of these analyses are sent to a control unit (CU) via a comparator (C). Electrical signals generated in the control unit (CU) set the parameters of a restorer (R) in a way ensuring emergence of all additional optical signals with wavelengths of (λ_{A1}, ... , X_{Az}) at its outputs, without distortion of the data transmitted using them.

## Description

The invention relates to a method and system for transmission of additional optical signals via a fibre optic telecommunication system, particularly a fibre optic telecommunication system with Wavelength-Division Multiplexing (WDM).

In known fibre optic telecommunication systems with wavelength-division multiplexing, an additional optical signal introduced to the system is monitored by a wavelength meter, and the result of this measurement is sent to a managing system. After it is ascertained in the managing system that the wavelength of the additional optical signal is equal to the wavelength of one of the useful optical signals transmitted via a telecommunication optical fibre, the transmission of the additional optical signal is halted using a switch. Only an additional optical signal with a wavelength different than the wavelength of useful optical signals transmitted via the fibre optic telecommunication system with wavelength-division multiplexing is introduced into the telecommunication optical fibre transmitting both the useful optical signals with various wavelengths and the additional optical signal. The additional optical signal is isolated in a demultiplexer located in the receiving part of the fibre optic telecommunication system with wavelength-division multiplexing.

Usage of multiplexers, demultiplexers, filters and directional photocouplers, used for collection or introduction of optical signals into the telecommunication optical fibre in a fibre optic telecommunication system with wavelength-division multiplexing, is described in the following US Patent Applications: US 2010021164A1, US 2011135309A1 and US 2011188861A1.

In a book by Krzysztof Perlicki, published by Wydawnictwa Komunikacji i 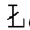 aczności, entitled: "Systemy transmisji optycznej WDM" (WDM optical transmission systems), functional structures of optical transmission systems with wavelength-division multiplexing and procedures for transmission of additional optical signals in them are described.

The essence of the transmission method for additional optical signals via a fibre optic telecommunication system, according to the invention, consists in the fact that useful optical signals with various wavelengths λ₁, ..., λₙ are introduced simultaneously to input interfaces of a multiplexer, and additional optical signals with wavelengths of λ_{A1}, ..., λ_{Az} are monitored in monitoring units, and then introduced via input interfaces to a processing unit.

In the processing unit, those additional optical signals with wavelengths assuming numerical values equal to the wavelengths of useful optical signals are modified, the modification procedure of additional optical signals being controlled by electrical signals sent by a control unit. Optical signals, modified in the processing unit, are introduced by a second photocoupler into the telecommunication optical fibre.

Optical signals are simultaneously collected from the telecommunication optical fibre via photocouplers coupled with it. Useful optical signals with various wavelengths λ₁, ..., λₙ are collected using a first photocoupler and then introduced to a comparator. Useful optical signals with various wavelengths λ₁, ..., λₙ and additional optical signals with wavelengths of λ_{A1}, ..., λ_{Az} are collected using a third photocoupler and introduced into the input of an analysis unit, controlled by electrical signals sent from the control unit. In the analysis unit, the correctness of transmission of optical signals in the telecommunication optical fibre is analysed, and the results of this analysis are introduced onto the second input of the comparator. In the comparator, electrical signals controlling the control unit are generated. Using the electrical signals generated in the control unit, the parameters of a restorer are set in a way ensuring emergence of all additional optical signals with wavelengths of λ_{A1}, ..., λ_{Az} at its outputs.

Preferably, additional optical signals with wavelengths assuming numerical values equal to the wavelengths of useful optical signals are coded in the processing unit, while in the restorer those additional optical signals coded in the processing unit are decoded.

Preferably, the wavelengths of these additional optical signals with wavelengths assuming numerical values equal to the wavelengths of useful optical signals are modified in the processing unit, while the wavelengths of these additional optical signals which have been modified in the processing unit are restored in the restorer; then in the restorer, the processed and unprocessed optical signals are delivered to a set of retuned narrow-band filters, each filtering off an optical signal with one of the wavelengths λ_{A1}, ..., λ_{Az}, and all additional optical signals with wavelengths of λ_{A1}, ..., λ_{Az} are obtained at the output of the set of retuned narrow-band filters.

The essence of the system for transmission of additional optical signals via a fibre optic telecommunication system, according to the invention, consists in the fact that the inputs of the monitoring units are inputs for additional optical signals with wavelengths of λ_{A1}, ..., λ_{Az}, while the outputs of the monitoring units are connected with the inputs of the processing unit for additional optical signals with wavelengths of λ_{A1}, ..., λ_{Az}. The output of the control unit is connected to the control input of the processing unit, while the output of the processing unit is connected to the second photocoupler coupled with the telecommunication optical fibre.

The telecommunication optical fibre is an optical connection between the multiplexer's output interface and the demultiplexer's input interface. The first photocoupler, second photocoupler, third photocoupler, and fourth photocoupler are coupled, in sequence, with the telecommunication optical fibre.

The first photocoupler is connected to the first input of the comparator, whose output is connected to the input of the control unit. The control unit is connected to the control inputs of the multiplexer and the demultiplexer.

The third photocoupler is connected to the input interface of the analysis unit of useful optical signals with wavelengths of λ₁, ..., λₙ and additional optical signals with wavelengths of λ_{A1}, ..., λ_{Az}. The output of the control unit is connected to the control input of the analysis unit. The output interface of the analysis unit is connected to the second input of the comparator.

The fourth photocoupler is connected to the first input of the restorer, whose second input is connected to the control unit. The outputs of the restorer are output interfaces for additional optical signals with wavelengths of λ_{A1}, ..., λ_{Az}.

Preferably, the processing unit is a coder of additional optical signals with wavelengths of λ_{A1}, ..., λ_{Az}, and the restorer of additional optical signals with wavelengths of λ_{A1}, ..., λ_{Az} is a decoder of encoded additional optical signals.

Preferably, the processing unit is a unit for modification of wavelengths λ_{A1}, ..., λ_{Az} of additional optical signals, and the restorer of additional optical signals with wavelengths of λ_{A1}, ..., λ_{Az} is a set of retuned narrow-band filters, each filtering off an optical signal with one of the wavelengths λ_{A1}, ..., λ_{Az}.

Preferably, the analysis unit is formed of an additional demultiplexer and an additional multiplexer connected serially, and the input interface of the additional demultiplexer is an input of the analysis unit while the output interface of the additional multiplexer is an output of the analysis unit.

Basic advantageous effects of application of the method and system for transmission of additional optical signals via a fibre optic telecommunication system, according to the invention, in relation to the state of the art, consist in the fact that a qualitatively correct transmission of additional optical signals is carried out in real-time without delays and without the risk of introduction of interchannel crosstalks.

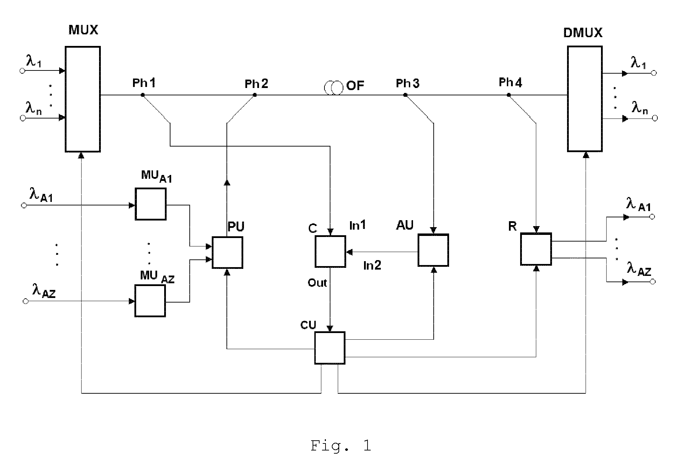

An embodiment of the system for transmission of additional optical signals via a fibre optic telecommunication system, according to the invention, is reproduced in the Figure in the form of a block diagram.

In the embodiment of the transmission method for additional optical signals via a fibre optic telecommunication system, according to the invention, the parameters of optical signals meet the standard requirements suggested by the ITU G.692 recommendation (Recommendation on Optical Interference for Multichannel Systems). The frequency spacing between two consecutive channels amounts to 100 GHz or 50 GHz.

Useful optical signals with various wavelengths λ₁, ..., λₙ are introduced simultaneously to input interfaces of a multiplexer MUX, and additional optical signals with wavelengths of λ_{A1}, ..., λ_{Az} are monitored in monitoring units MU_{A1}, ..., MU_{Az}. Then, the additional optical signals with wavelengths of λ_{A1}, ..., λ_{Az} are introduced via input interfaces to a processing unit PU, where those additional optical signals with wavelengths assuming numerical values equal to the wavelengths of useful optical signals are modified. The procedure of modification of the additional optical signals is controlled by electrical signals sent by a control unit CU. The modified optical signals are introduced into the telecommunication optical fibre OF via the second photocoupler Ph2.

Both the useful optical signals with various wavelengths λ₁, ..., λₙ, and the modified and unmodified additional optical signals with wavelengths of λ_{A1}, ..., λ_{Az} are simultaneously collected from the telecommunication optical fibre OF via photocouplers coupled with it.

Using the first photocoupler Ph1, useful optical signals with various wavelengths λ₁, ..., λₙ are collected and then introduced to a comparator C. Using the third photocoupler Ph3, useful optical signals with various wavelengths λ₁, ..., λₙ and additional optical signals with wavelengths of λ_{A1}, ..., λ_{Az} are collected and introduced into the input of an analysis unit AU, controlled by electrical signals sent from the control unit CU.

In the analysis unit AU, the correctness of transmission of optical signals in the telecommunication optical fibre OF is analysed, and the results of this analysis are introduced to the second input In2 of the comparator C. In the comparator C, electrical signals controlling the control unit CU are generated. Using the electrical signals generated in the control unit CU, the parameters of the restorer R are set in a way ensuring emergence of all additional optical signals with wavelengths of λ_{A1}, ..., λ_{Az} at its outputs.

In a second embodiment of the method, these additional optical signals with wavelengths assuming numerical values equal to the wavelengths of useful optical signals are coded in the processing unit PU, and these additional optical signals coded in the processing unit PU are decoded in the restorer R.

In a third embodiment of the method, the wavelengths of these additional optical signals with wavelengths assuming numerical values equal to the wavelengths of useful optical signals are modified in the processing unit PU. For these additional optical signals with wavelengths equal to the wavelengths of useful optical signals additional channels are created - optical signals with wavelengths meeting the standard requirements defined in the ITU G.692 recommendation. The wavelengths of these additional optical signals which have been modified in the processing unit PU are restored in the restorer R. Then, in the restorer R, the processed and unprocessed optical signals are delivered to a set of retuned narrow-band filters, each filtering off an optical signal with one of the wavelengths λ_{A1}, ..., λ_{Az}, and all additional optical signals with wavelengths of λ_{A1}, ..., λ_{Az} are obtained at the output of the set of retuned narrow-band filters.

In an embodiment of the system for transmission of additional optical signals via a fibre optic telecommunication system, particularly a fibre optic telecommunication system with wavelength-division multiplexing WDM, according to the invention, the inputs of the monitoring units MU_{A1}, ..., MU_{Az} are inputs for additional optical signals with wavelengths of λ_{A1}, ..., λ_{Az}, while the outputs of the monitoring units MU_{A1}, ..., MU_{Az} are connected with the inputs of the processing unit PU of additional optical signals with wavelengths of λ_{A1}, ..., λ_{Az}. The output of the control unit CU is connected to the control input of the processing unit PU, and the output of the processing unit PU is connected to the second photocoupler Ph2, coupled with the telecommunication optical fibre OF.

The telecommunication optical fibre OF is an optical connection of the multiplexer's MUX output interface with the demultiplexer's DMUX input interface. First photocoupler Ph1, second photocoupler Ph2, third photocoupler Ph3, and fourth photocoupler Ph4 are coupled, in sequence, with the telecommunication optical fibre OF.

The first photocoupler Ph1 is connected to the first input In1 of the comparator C, whose output Out is connected to the input of the control unit CU, and the control unit CU is connected to the control inputs of the multiplexer MUX and the demultiplexer DMUX. The third photocoupler Ph3 is connected to the input interface of the analysis unit AU of useful optical signals with wavelengths of λ₁, ..., λₙ and of additional optical signals with wavelengths of λ_{A1}, ..., λ_{Az}. The output of the control unit CU is connected to the control input of the analysis unit AU, and the output interface of the analysis unit AU is connected to the second input In2 of the comparator C. The fourth photocoupler Ph4 is connected to the first input of the restorer R, whose second input is connected to the control unit CU, while the outputs of the restorer R are output interfaces for additional optical signals with wavelengths of λ_{A1}, ..., λ_{Az}.

In a second embodiment, the processing unit PU is a coder of additional optical signals with wavelengths of λ_{A1}, ..., λ_{Az}, and the restorer R of additional optical signals with wavelengths of λ_{A1}, ..., λ_{Az} is a decoder of encoded additional optical signals.

In a third embodiment, the processing unit PU is a modification unit for wavelengths λ_{A1}, ..., λ_{Az} of additional optical signals, and the restorer R of additional optical signals with wavelengths of λ_{A1}, ..., λ_{Az} is a set of retuned narrow-band filters, each filtering off an optical signal with one of the wavelengths λ_{A1}, ..., λ_{Az}.

In another embodiment, the analysis unit AU is formed of an additional demultiplexer and an additional multiplexer connected serially, and the input interface of the additional demultiplexer is an input of the analysis unit AU while the output interface of the additional multiplexer is an output of the analysis unit AU.

The method and system for transmission of additional optical signals via a fibre optic telecommunication system, according to the invention, are suitable for interference-free real-time transmission of additional optical signals via a fibre optic telecommunication system.

Although the method and system for transmission of additional optical signals via a fibre optic telecommunication system, particularly a fibre optic telecommunication system with wavelength-division multiplexing WDM, according to the invention, are defined by seven claims, shown in the form of specific embodiments in the description of the invention and reproduced in the Figure, it is evident for a person skilled in the art of methods and systems for transmission of additional optical signals via a fibre optic telecommunication system that the data on the method and system for transmission of additional optical signals via a fibre optic telecommunication system contained therein cannot be interpreted as limiting the inventive idea only to these data.

## Claims

1. A method for transmission of additional optical signals via a fibre optic telecommunication system, in which useful and additional optical signals with various wavelengths originating from various sources are transmitted simultaneously via one telecommunication optical fibre, **characterised in that** useful optical signals with various wavelengths (λ₁, ..., λₙ) are introduced simultaneously to input interfaces of a multiplexer (MUX) while additional optical signals with wavelengths of (λ_{A1}, ..., λ_{Az}) are monitored in monitoring units (MU_{A1}, ..., MU_{Az}) and then introduced via input interfaces to a processing unit (PU), in which those additional optical signals with wavelengths assuming numerical values equal to the wavelengths of useful optical signals are modified, the modification procedure of additional optical signals being controlled by electrical signals sent by a control unit (CU), next, modified optical signals are introduced via a second photocoupler (Ph2) into the telecommunication optical fibre (OF), from which optical signals are collected simultaneously via photocouplers coupled with it, wherein useful optical signals with various wavelengths (λ₁, ..., λₙ), collected using a first photocoupler (Ph1), are introduced to a comparator (C), useful optical signals with various wavelengths (λ₁, ..., λₙ) and additional optical signals with wavelengths of (λ_{A1}, ..., λ_{Az}) are collected using a third photocoupler (Ph3) and introduced into the input of an analysis unit (AU), controlled by electrical signals sent from the control unit (CU), and in the analysis unit (AU) the correctness of transmission of optical signals in the telecommunication optical fibre (OF) is analysed, and the results of this analysis are introduced to a second input (In2) of the comparator (C) while electrical signals controlling the control unit (CU) are generated in it, and using the electrical signals generated in the control unit (CU) the parameters of a restorer (R) are set in a way ensuring emergence of all additional optical signals with wavelengths of (λ_{A1}, ..., λ_{Az}) at its outputs.

2. The method according to claim 1, **characterised in that** in the processing unit (PU) those additional optical signals with wavelengths assuming numerical values equal to the wavelengths of useful optical signals are coded, while in the restorer (R) those additional optical signals coded in the processing unit (PU) are decoded.

3. The method according to claim 1, **characterised in that** in the processing unit (PU) wavelengths of these additional optical signals with wavelengths assuming numerical values equal to the wavelengths of useful optical signals are modified, while in the restorer (R) the wavelengths of these additional optical signals which have been modified in the processing unit (PU) are restored, and then in the restorer (R) the processed and unprocessed optical signals are delivered to a set of retuned narrow-band filters, each filtering off an optical signal with one of the wavelengths (λ_{A1}, ..., λ_{Az}), and at the output of the set of retuned narrow-band filters all additional optical signals with wavelengths of (λ_{A1}, ..., λ_{Az}) are obtained.

4. A system for transmission of additional optical signals via a fibre optic telecommunication system, containing multiplexers, demultiplexers, photocouplers, a control unit and a comparator, **characterised in that** the inputs of the monitoring units (MU_{A1}, ..., MU_{Az}) are inputs for additional optical signals with wavelengths of (λ_{A1}, ..., λ_{Az}) while the outputs of the monitoring units (MU_{A1}, ... , MU_{Az}) are connected to the inputs of the processing unit (PU) of additional optical signals with wavelengths of (λ_{A1}, ..., λ_{Az}), and the output of the control unit (CU) is connected to the control input of the processing unit (PU), while the output of the processing unit (PU) is connected to the second photocoupler (Ph2) coupled with the telecommunication optical fibre (OF), which is an optical connection between the multiplexer's (MUX) output interface and the demultiplexer's (DMUX) input interface, and wherein first photocoupler (Ph1), second photocoupler (Ph2), third photocoupler (Ph3) and fourth photocoupler (Ph4) are coupled, in sequence, with the telecommunication optical fibre (OF), while the first photocoupler (Ph1) is connected to the first input (In1) of the comparator (C), the output (Out) of which is connected to the input of the control unit (CU), the control unit (CU) being connected to the control inputs of the multiplexer (MUX) and demultiplexer (DMUX), and the third photocoupler (Ph3) is connected to the input interface of the analysis unit (AU) of useful optical signals with wavelengths of (λ₁, ..., λₙ) and of additional optical signals with wavelengths of (λ_{A1}, ..., λ_{Az}), while the output of the control unit (CU) is connected to the control input of the analysis unit (AU) and the output interface of the analysis unit (AU) is connected to the second input (In2) of the comparator (C), and the fourth photocoupler (Ph4) is connected to the first input of the restorer (R), whose second input is connected to the control unit (CU), while the outputs of the restorer (R) are output interfaces for additional optical signals with wavelengths of (λ_{A1}, ..., λ_{Az}).

5. The system according to claim 4, **characterised in that** the processing unit (PU) is a coder of additional optical signals with wavelengths of (λ_{A1}, ..., λ_{Az}), and the restorer (R) of additional optical signals with wavelengths of (λ_{A1}, ..., λ_{Az}) is a decoder of the coded additional optical signals.

6. The system according to claim 4, **characterised in that** the processing unit (PU) is a modification unit for wavelengths (λ_{A1}, ..., λ_{Az}) of additional optical signals, and the restorer (R) of additional optical signals with wavelengths of (λ_{A1}, ..., λ_{Az}) is a set of retuned narrow-band filters, each filtering off an optical signal with one of the wavelengths (λ_{A1}, ..., λ_{Az}).

7. The system according to claims 4 or 5 or 6, **characterised in that** the analysis unit (AU) is formed of an additional demultiplexer and an additional multiplexer connected serially, and the input interface of the additional demultiplexer is an input of the analysis unit (AU) while the output interface of the additional multiplexer is an output of the analysis unit (AU).
